# EUROPEAN PATENT SPECIFICATION

(11) **EP 1 920 976 B1**
(45) Date of publication and mention of the grant of the patent: **11.07.2012**
(21) Application number: 07118955.9
(22) Date of filing: 22.10.2007
(51) Int. Cl.: B60R 21/239, B60R 21/231, B60R 21/207

(54) **Airbag for side collision, airbag device for side collision, and vehicle seat**
Seitenaufprallairbag, Airbagvorrichtung für Seitenaufprall und Fahrzeugsitz
Airbag pour collision latérale, dispositif d'airbag pour collision latérale et siège de véhicule

(30) Priority: 07.11.2006 JP 2006301849
(43) Date of publication of application: 14.05.2008
(73) Proprietor: TAKATA CORPORATION, Minato-ku, Tokyo 106-8510 (JP)
(72) Inventor: Kashiwagi, Daisuke, Tokyo 106-8510 (JP)
(74) Representative: Vossius & Partner

(56) References cited:
- EP-A- 1 595 751
- US-A1- 2006 001 244
- US-B1- 6 612 610

## Description

The present invention relates to an airbag for side collision, an airbag device for side collision, and a vehicle seat for restraining a body of an occupant upon side collision of a vehicle, for example, an automobile.

Hitherto, there has been disclosed the airbag device for side collision structured to restrain the occupant body in a vehicle, for example, an automobile upon the side collision or overturning thereof by expanding the airbag for side collision to the side of the occupant through the inflator (see JP-A 2000-280853).

D1 - US6612610 B1 discloses - an airbag for side collision which expands between an occupant seated on a seat inside a vehicle and an inner side wall portion of the vehicle for deployment, wherein two vent holes are formed to be positioned to a front side in a longitudinal direction of the vehicle upon expansion for deployment.

The document as the generally employed art discloses the basic structure of the airbag for side collision which is installed in a seatback of the seat so as to be expanded for deployment between the occupant and the inner side wall portion of the vehicle by the pressure fluid (gas) injected from the inflator upon the side collision. In order to optimize the above-structured airbag device, improvement of the performance for absorbing the impact exerted to the occupant is inevitable.

Accordingly, the object of the present invention is to provide an airbag for side collision, an airbag device for side collision, and a vehicle seat for further improving the performance for absorbing the impact exerted to the occupant.

In order to achieve the object, an airbag for side collision is provided which expands between an occupant seated on a seat inside a vehicle and an inner side wall portion of the vehicle for deployment. A plurality of vent holes are formed to be positioned to a front side in a longitudinal direction of the vehicle upon expansion for deployment.

Generally, vent holes are formed in the airbag for side collision, through which the surplus pressure fluid in the chamber or the gas forced out from the chamber upon protection of the occupant is discharged to the outside the chamber. The impact exerted to the occupant to be protected by the airbag is released, thus allowing flexible protection of the occupant.

Accordingly two vent holes are formed to be positioned to the front side in the longitudinal direction of the vehicle upon expansion of the airbag for side collision for deployment. This makes it possible to prevent the vent holes from being pressed against the inner side wall portion of the vehicle and being sealed thereby when the airbag for side collision protects the occupant. Accordingly, the pressure fluid may be smoothly discharged. As the vent holes are arranged to the front side, the pressure fluid may be injected at the point away from the occupant.

This makes it possible to flexibly absorb the impact exerted to the occupant for further improving the performance to absorb the impact to the occupant.

In the first aspect of the present invention, a continuous stitch portion is formed by continuously sewing peripheral portions of the plurality of the vent holes.

Relatively high hoop stress is applied to the vent holes through which the pressure fluid is injected. When the vent holes are formed, each periphery of the respective vent holes is provided with a stitch portion. This makes it possible to suppress the base cloth fracture from the vent hole as well as suppress the enlargement of the area of the opening of the vent hole. As the respective peripheries of the vent holes are sequentially sewn, the man hour for manufacturing the airbag for side collision may be reduced compared to the case where a plurality of independent annular stitch portions are separately sewn.

In the first aspect of the present invention the continuous stitch portion is formed into ' substantially a figure-of-eight shape by sewing the peripheral portions of the two vent holes.

Peripheries of two vent holes are continuously sewn into substantially a figure-of-eight shape to suppress the increase in the man-hour for manufacturing the airbag for side collision compared to the case where two independent annular stitch portions are separately sewn.

In the second aspect of the present invention according to the first invention, the plurality of vent holes are formed to be positioned to an outer side in a lateral direction of the vehicle upon expansion for deployment.

In the second aspect of the present invention, a plurality of vent holes are formed to be positioned to the front side in the longitudinal direction, the outer side in the lateral direction of the vehicle upon expansion of the airbag for side collision for deployment. This makes it possible to allow the pressure fluid to be injected to the inner side wall opposite the occupant.

In the third aspect of the present invention according to the first or the second invention, the plurality of vent holes are formed to be positioned to a lower side in a vertical direction of the vehicle upon expansion for deployment.

This makes it possible to inject the pressure fluid from the point further away from the occupant (upper body of the occupant).

In the fourth aspect of the present invention according to the third invention, the plurality of vent holes are formed such that a total area of openings of the vent holes is substantially equal to a reference area set as an area of an opening of a single vent hole for ensuring a required discharge amount.

This makes it possible to reduce each size of the vent holes while ensuring the required discharge amount so as to generally bias the area where the vent holes are formed to the front side of the airbag for side collision.

In the fifth aspect of the present invention according to the fifth or the sixth invention, a reinforcing cloth is sewn onto outer peripheral edge portions of the plurality of vent holes together with the continuous stitch portion.

This makes it possible to reduce the force applied to the vent holes upon expansion of the airbag, thus improving the strength of the vent hole.

In the sixth aspect of the present invention, the airbag device for side collision includes the airbag for side collision according to any one of the first to the seventh inventions, and an inflator for supplying a pressure fluid which allows the airbag for side collision to expand for deployment.

In the seventh aspect of the present invention, the seat for a vehicle includes the airbag for side collision according to any one of the first to the fifth aspects, and an inflator for supplying a pressure fluid which allows the airbag for side collision to expand for deployment.

The present invention further improves the performance for absorbing the impact exerted to the occupant.

The present invention will be illustrated with an embodiment referring to the drawings,
Fig. 1 is side view schematically showing a normal state of a seat of an automobile equipped with an airbag device for side collision according to an embodiment of the present invention;
Fig. 2 is a side view schematically showing the state where the airbag device for side collision according to the embodiment of the present invention equipped in the seat of the automobile is expanded for deployment;
Fig. 3 is a plan view schematically snowing the state where the airbag device for side collision according to the embodiment of the present invention equipped in the seat of the automobile is expanded for deployment
Fig. 4 is a right side view showing the entire structure of the airbag for side collision in the state where the airbag is expanded for deployment;
Fig. 5 is a left side view showing the entire structure of the airbag for side collision in the state where the airbag is expanded for deployment; and
Fig. 6 is a right side view showing the entire structure of the airbag for side collision according to the modified example provided with the reinforcing cloth in the state where the airbag is expanded for deployment.

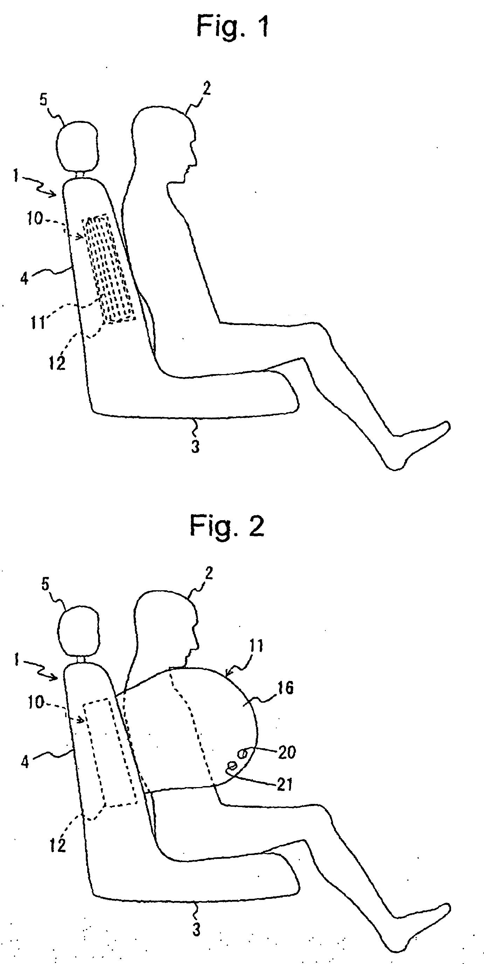

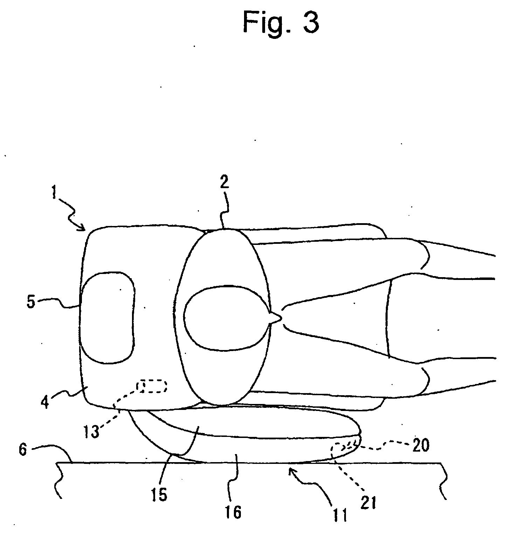

Fig. 1 is a side view schematically showing a normal state of a seat of a vehicle equipped with an airbag device for side collision according to an embodiment of the present invention. Fig. 2 is a side view schematically showing the state where the airbag is expanded for deployment. Fig. 3 is a plan view schematically showing the state where the airbag is expanded for deployment. In the following description, the upper, lower, left and right directions shown in Fig. 3 will represent the left, right, backward and forward directions, respectively.

A seat (for a vehicle) 1 shown in Figs. 1 to 3 is the one provided in an interior of a vehicle (automobile), and includes a seat portion on which an occupant 2 is seated, a seatback 4 extending upward from the rear portion of the seat portion 3, and a head rest 5 attached to the top portion of the seatback 4. The seat 1 contains an airbag device 10 for side collision therein for restraining the upper half of the body of the occupant 2 upon side collision or overturning of the vehicle caused by the accident. The embodiment will be explained with respect to the seat 1 arranged to the right in the vehicle. However, the airbag device 10 for side collision may have a symmetrical structure so as to be installed in the left seat, thus providing the similar effects.

The airbag device 10 for side collision is provided with an airbag 11 for side collision which expands for deployment between a side wall (inner side wall) portion 6 of the vehicle body and the occupant 2 seated on the seat 1, a plastic casing 12 which stores the airbag 11 for side collision in the folded state, and an inflator 13 (see Fig. 3) for supplying gas (pressure fluid) to expand the airbag 11 for side collision for deployment. The inflator 13 is ignited by a not-shown inflator control circuit. The seat 1 is equipped with the airbag device 10 for side collision at the height position such that the airbag 11 for side collision deploys around the position corresponding to the chest of the occupant 2 who is seated on the seat.

Referring to Fig. 1, the airbag 11 for side collision is stored inside the seatback 4 of the seat 1 while being folded in the casing 12 in the normal state. Meanwhile, in the case where the side collision of the vehicle occurs, the inflator control circuit (not shown) activates the initiator (not shown) of the inflator 13 in the airbag device 10 for side collision such that the gas from the ignited inflator 13 is supplied into the airbag 11 for side collision. That is, upon reception of the supply of gas, the airbag 11 for side collision is structured to expand as shown in Fig. 2. In the embodiment, the airbag breaks the stitch line (not shown) formed between the cloth to the front of the seatback 4 and the side surface of the cloth at the side wall of the body so as to burst out of the seat 1 for deployment between the inner side wall portion 6 and the occupant 2 seated on the seat 1 (for example, the portion around the chest) alongside the inner side wall portion 6.

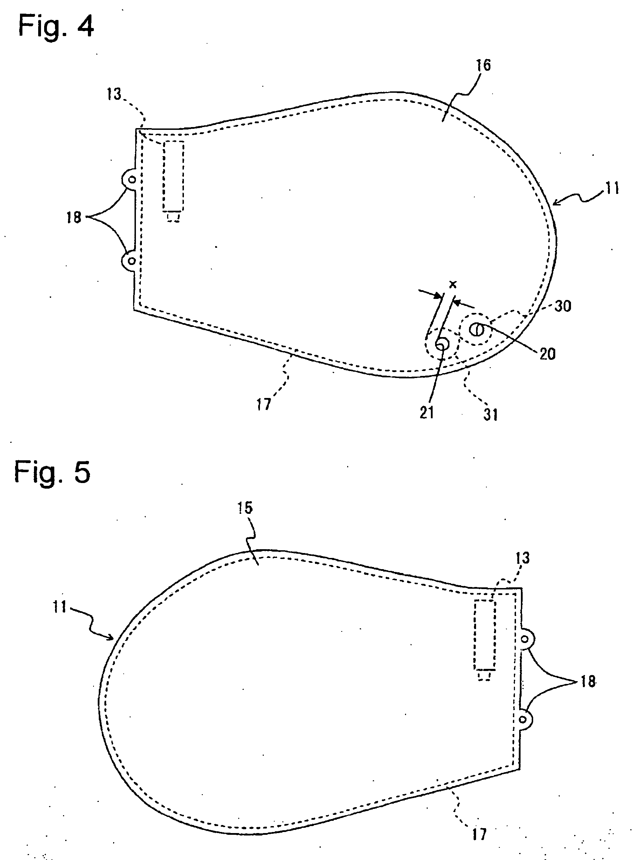

Fig. 4 is a right side view showing a general structure of the airbag 11 for side collision in the state where the airbag is expanded for deployment. Fig. 5 is a left side view.

Referring to Figs. 4 and 5, the airbag 11 for side collision is formed into a bag with a single chamber by sewing entire peripheries of a first panel 15 at the side of the occupant 2 (inner side in the lateral direction) and a second panel 16 (outer side in the lateral direction) each having substantially the same shape together along the outer edges thereof.

A stitch portion 17 formed around the entire peripheries of the first and the second panels 15 and 16 to be sewn together is required to exhibit the strength enough to bear the internal pressure of the chamber expected to be applied upon expansion for deployment. In the case where the single stitch is insufficient, the multi-stitch process is performed, or a seal member (for example, a silicon rubber) is interposed between the first and the second panels 15 and 16 intended to be sewn together, thus improving the air-tightness at the panel stitch portion. Fixing portions 18 protrude at the rear end portions of the first and the second panels 15 and 16. The airbag 11 for side collision may be tightly fixed to the casing 12 to which the fixing portions 18 are fixed through bolts and the like.

The first panel 15 includes a slit through which the inflator 13 is inserted into the airbag 11 for side collision, and a plurality of (for example, two) covers to cover the slit, both of which are not shown. The cover is formed by sewing the filler cloth onto the first panel 15. After inserting the inflator 13 into the airbag 11 for side collision through the aforementioned slit, the slit is sealed by the folded cover, thus improving the air-tightness of the airbag 11 for side collision.

Two vent holes 20 and 21 are formed inside the airbag 11 for side collision in the lateral direction of the vehicle, that is, the first panel 15 so as to be positioned to the front in the longitudinal direction, the outer side in the lateral direction, and the lower side in the vertical direction of the vehicle upon the expansion of the airbag for deployment. Assuming that the area of the opening of the single vent hole formed in the airbag 11 for side collision to ensure a required air discharge amount is set to the reference area, the vent holes 20 and 21 are formed such that the total area of the openings thereof is substantially the same as the reference area. The required air discharge amount is ensured by setting the total area of the openings to the reference area, and the vent hole having the reference area of the opening is divided into plural sections so as to reduce each size of the vent holes. The vent holes 20 and 21 each having the reduced size are arranged alongside the stitch portion 17 such that the discharge portion of the chamber is biased to the front of the airbag 11 for side collision. Upon expansion of the airbag 11 for side collision for deployment, the vent holes 20 and 21 are intended to be directed forward as shown in Fig. 3. Each diameter of the vent holes 20 and 21 is set to the value approximately from 33 mm to 35 mm, for example.

Annular stitch portions 30 and 31 (continuous stitch portion) are formed around the vent holes 20 and 21 on the first panel 15 so as to be encircled thereby. The annular stitch portions 30 and 31 are continuously formed by sewing the portions around the vent holes 20 and 21 into a figure-of-eight shape with a common thread. The annular stitch portions 30 and 31 may be sewn through the single-stitch process. If the single-stitch process is insufficient, they may be sewn through the multi-stitch process.

Various sensors (for example, acceleration sensor) are installed in the vehicle equipped with the above-structured airbag device 10 for side collision so as to detect (or predict) the collision (for example, side collision) or overturning of the vehicle. When it is determined that the occupant 2 is at a risk for collision against the inner side wall portion 6 based on the detection signal of the sensors upon the side collision of the vehicle, the inflator control circuit serves to activate the initiator of the inflator 13 based on the detection signal from the sensor. The inflator 13 is then activated such that the gas for expanding the airbag is supplied into the chamber to expand the airbag 11 for side collision for deployment between the side wall portion 6 of the vehicle body and the occupant 2. As the airbag 11 for side collision deploys, the part of the occupant 2 in the movement toward the inner side wall portion 6, for example, around the chest may be protected by the airbag 11 for side collision to absorb the impact exerted to the occupant 2.

The above-structured airbag device 10 for side collision which is operated as described above according to the embodiment provides the following effect.

In the embodiment, the vent holes 20 and 21 are formed in the airbag 11 for side collision. The surplus gas in the chamber or the gas forced back upon protection of the occupant 2 may be discharged out of the chamber through the vent holes 20 and 21. This makes it possible to flexibly protect the body of the occupant 2 while releasing the resultant impact applied by the airbag 11 for side collision.

In the present embodiment, the vent holes 20 and 21 are formed to be positioned to the front in the longitudinal direction of the vehicle when the airbag 11 for side collision expands for deployment. This ensures to prevent the vent holes 20 and 21 from being pushed against the side wall portion 6 of the vehicle body and sealed when the occupant 2 is protected by the airbag 11 for side collision. This makes it possible to smoothly discharge the gas. As the vent holes 20 and 21 are positioned to the front side, the gas may be injected at the position away from the occupant 2.

The present embodiment allows the flexible absorption of the impact exerted to the body portion around the chest of the occupant 2, thus further improving the performance for absorbing the impact exerted to the occupant.

In the embodiment, the vent holes 20 and 21 are formed to be positioned at the outer side in the lateral direction of the vehicle upon expansion of the airbag 11 for side collision for deployment. This makes it possible to inject the gas to the side wall portion 6 of the vehicle body opposite the occupant 2.

In the embodiment, the vent holes 20 and 21 are formed to be positioned to the lower side in the vertical direction of the vehicle upon expansion of the airbag 11 for side collision for deployment. This makes it possible to inject the gas at the position further away from the occupant 2 (upper half of the body of the occupant 2).

Assuming that the area of an opening of the single vent hole for ensuring the required discharge amount is set as the reference area, each of the vent holes 20 and 21 is set as being obtained by dividing the single vent hole with the reference area of the opening such that the total area of the openings of the vent holes 20 and 21 becomes substantially equal to the reference area for the purpose of reducing each opening size. As a result, the vent holes 20 and 21 may be positioned to the front edge of the airbag 11 for side collision such that the position for discharging the gas is made further away from the occupant 2.

In the embodiment, annular stitch portions 30 and 31 are formed to encircle the vent holes 20 and 21, respectively. In spite of the high hoop stress applied to the vent holes 20 and 21 for discharging the gas, rupture of the base cloth (first panel 15) from the vent holes 20 and 21 may be suppressed so as to prevent each opening area of the vent holes 20 and 21 from being expanded.

The annular stitch portions 30 and 31 around the vent holes 20 and 21 are continuously formed into the figure-of-eight shape with the common thread alongside the stitch path. This makes it possible to suppress the increase in the man hour for manufacturing the airbag 11 for side collision compared to the case where the annular stitch portions 30 and 31 are set apart and separately formed.

The present invention is not limited to the embodiment as described above but may be modified into various forms without departing from the scope of the present invention. The modified examples of the present invention will be described hereinafter.

(1) Optimization of the distance relationship between the annular stitch portion and the vent hole
Referring to Fig. 4, in the case where each distance x between the vent holes 20 and 21 and the annular stitch portions 30 and 31 is too large, it tends to be difficult to suppress each enlargement of the vent holes 20 and 21 under the hoop stress upon expansion of the airbag for deployment. Conversely, if the distance x is too small, the annular stitch portion is likely to be displaced owing to the enlargement of the bent holes 20 and 21 under the hoop stress. This may cause the vent holes 20 and 21 to be ruptured. In consideration with the aforementioned points, the applicant of the present invention concludes that it is preferable to set the distance x to be in the range from 6 mm to 14 mm, and specifically, to about 10 mm as the optimal value.

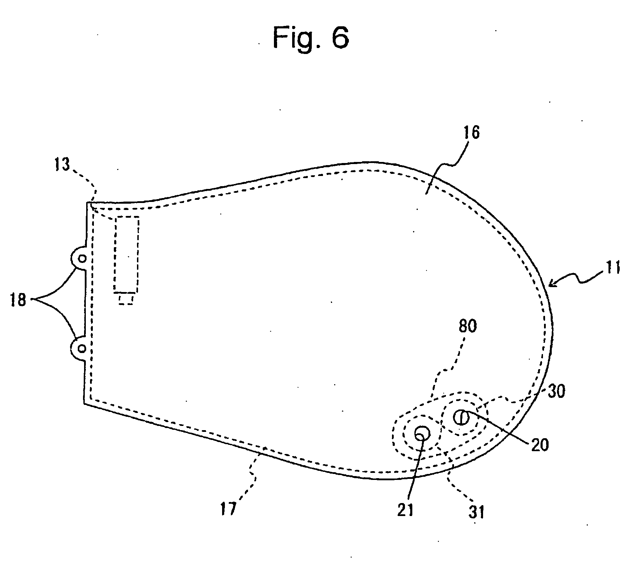

(2) Provision of reinforcing cloth around the vent hole
Referring to Fig. 6 corresponding to Fig. 4, a reinforcing cloth (patch cloth) 80 is sewn to the inside of the airbag at the outer peripheral edges of the vent holes 20 and 21 with the annular stitch portions 30 and 31. They are not necessarily sewn together with the annular stitch portions 30 and 31 but may be sewn through the other process. The use of the reinforcing cloth 80 may reduce the force applied to the vent holes 20 and 21 upon expansion of the airbag, thus improving the strength.

The aforementioned cases (1) and (2) may be combined, that is, the reinforcing cloth 80 may be provided while setting each distance x between the annular stitch portions 30, 31 and the vent holes 20, 21, respectively to the value in the range from 6 rom to 14 mm.

(3) Others
The examples have been described with respect to the case where the present invention is applied to the airbag for side collision with a single chamber. However, the present invention may be applied to the airbag for side collision with a plurality of chambers so long as the chambers are intended to protect around the chest of the occupant seated on the seat, resulting in the same results. In case of the airbag for side collision with two chambers including the upper chamber for regulating the movement of the chest of the occupant and the lower chamber for regulating the movement of the waist of the occupant, the vent hole may be formed in the lower half portion of the front edge of the upper chamber so as to further flexibly absorb the impact exerted to the body portion around the chest of the occupant.

The structure of the airbag 11 for side collision formed by sewing the first and the second panels 15 and 16 together has been described. However, the airbag 11 for side collision may be formed through the other process to be sewn as a bag, for example. The present invention is applied to the airbag device for side collision installed in the seatback 4 of the seat 1 as the seat mount type has been described. Besides the aforementioned type, the present invention is applicable to the airbag for side collision of door mount type or pillar mount type having the airbag installed in the vehicle door or the pillar.

Each number of the vent holes and the annular stitch portions is not limited to the value 2, but may be set to 3 or larger number. As the total area of the openings of the vent holes is set to be substantially the same as the "reference area", each size of the vent holes becomes smaller as the increase in the number thereof. It is advantageous to bias the distribution of the vent holes to the front edge of the airbag 11 for side collision. In the case where the number of the annular stitch portions is set to 3 or more, they are continuously sewn to form the S-like shape (sewing is performed on the line passing through the portion between the vent holes, and returning at the vent hole at the end to reach the point where the sewing starts while forming the S-like shape). In this way, all the annular stitch portions may be efficiently formed by performing the single sewing process. In the case where the priority with respect to the manufacturing efficiency is not so high, the annular stitch portions around the corresponding vent holes may be separately sewn.

## Claims

1. An airbag for side collision which expands between an occupant seated on a seat inside a vehicle and an inner side wall portion of the vehicle for deployment, wherein two vent holes (20, 21) are formed to be positioned to a front side in a longitudinal direction of the vehicle upon expansion for deployment,
**characterized in that**
a continuous stitch portion (30, 31) is formed by continuously sawing peripheral portions of the vent holes (20, 21),
the continuous stitch portion (30, 31) is formed into substantially a figure-of-eight shape by sewing the peripheral portions of the two vent holes (20, 21).

2. The airbag for side collision according to Claim 1, wherein the plurality of vent holes (20, 21) are formed to be positioned to an outer side in a lateral direction of the vehicle upon expansion for deployment.

3. The airbag for side collision according to Claim 1 or 2, wherein the plurality of vent holes (20, 21) are formed to be positioned to a lower side in a vertical direction of the vehicle upon expansion for deployment.

4. The airbag for side collision according to Claim 3, wherein the plurality of vent holes (20, 21) are formed such that a total area of openings of the vent holes (20, 21) is substantially equal to a reference area set as an area of an opening of a single vent hole for ensuring a required discharge amount.

5. The airbag for side collision according to any one of claims 1 to 4, wherein a reinforcing cloth (80) is sewn onto outer peripheral edge portions of the plurality of vent holes (20, 21) together with the continuous stitch portion.

6. An airbag device for side collision comprising:
the airbag (11) for side collision according to any one of Claims 1 to 5; and
an inflator (13) for supplying a pressure fluid which allows the airbag (11) for side collision to expand for deployment.

7. A seat for a vehicle comprising:
the airbag (11) for side collision according to any one of Claims 1 to 5; and
an inflator (23) for supplying a pressure fluid which allows the airbag (11) for side collision to expand for deployment.

## Patentansprüche

1. Seitenaufprallairbag, der zum Entfalten zwischen einem auf einem Sitz im Innenraum eines Fahrzeugs sitzenden Insassen und einem inneren Seitenwandabschnitt des Fahrzeuges expandiert, wobei zwei Entlüftungslöcher (20, 21) so ausgebildet sind, dass sie bei Expansion zum Entfalten an einer Vorderseite in Längsrichtung des Fahrzeugs positioniert sind, **dadurch gekennzeichnet, dass**
ein durchgehender Nahtabschnitt (30, 31) durch kontinuierliches Vernähen von Umfangsabschnitten der Entlüftungslöcher (20, 21) ausgebildet wird,
wobei der durchgehende Nahtabschnitt (30, 31) durch Vernähen der Umfangsabschnitte der beiden Entlüftungslöcher (20, 21) im Wesentlichen in Form einer Acht ausgebildet ist.

2. Seitenaufprallairbag nach Anspruch 1, wobei die Vielzahl von Entlüftungslöchern (20, 21) so ausgebildet sind, dass sie bei Expansion zum Entfalten an einer Außenseite in Querrichtung des Fahrzeugs positioniert sind.

3. Seitenaufprallairbag nach Anspruch 1 oder 2, wobei die Vielzahl von Entlüftungslöchern (20, 21) so ausgebildet sind, dass sie bei Expansion zum Entfalten an einer Unterseite in Vertikalrichtung des Fahrzeugs positioniert sind.

4. Seitenaufprallairbag nach Anspruch 3, wobei die Vielzahl von Entlüftungslöchern (20, 21) so ausgebildet sind, dass eine Gesamtfläche von Öffnungen der Entlüftungslöcher (20, 21) im Wesentlichen gleich einer Bezugsfläche ist, die als ein Bereich einer Öffnung eines einzelnen Entlüftungslochs zum Gewährleisten einer notwendigen Ausflussmenge festgelegt ist.

5. Seitenaufprallairbag nach einem der Ansprüche 1 bis 4, wobei ein verstärkendes Gewebe (80) auf äußeren Umfangskantenabschnitten der Vielzahl von Entlüftungslöchern (20, 21) zusammen mit dem durchgehenden Nahtabschnitt aufgenäht ist.

6. Airbagvorrichtung für Seitenaufprall mit:
einem Seitenaufprallairbag (11) nach einem der Ansprüche 1 bis 5; und
einem Gasgenerator (13) zum Bereitstellen eines Druckmediums, so daß der Seitenaufprallairbag (11) zum Entfalten expandierbar ist.

7. Fahrzeugsitz mit:
einem Seitenaufprallairbag (11) nach einem der Ansprüche 1 bis 5; und
einem Gasgenerator (13) zum Bereitstellen eines Druckmediums, so daß der Seitenaufprallairbag (11) zum Entfalten expandierbar ist.

## Revendications

1. Coussin gonflable de protection contre une collision latérale, qui se gonfle pour être déployé entre un passager assis sur un siège à l'intérieur d'un véhicule et une partie de paroi intérieure du véhicule, où deux trous d'aération (20, 21) sont formés de manière à être positionnés sur un côté avant dans une direction longitudinale du véhicule lors du déploiement par gonflement, **caractérisé**
**en ce qu'**une partie cousue continue (30, 31) est formée par couture continue de zones périphériques des trous d'aération (20, 21),
et **en ce que** la partie cousue continue (30, 31) présente une forme sensiblement en 8 par couture des zones périphériques des deux trous d'aération (20, 21).

2. Coussin gonflable de protection contre une collision latérale selon la revendication 1, où la pluralité de trous d'aération (20, 21) est formée pour être positionnée sur un côté extérieur dans une direction latérale du véhicule lors du déploiement par gonflement.

3. Coussin gonflable de protection contre une collision latérale selon la revendication 2 ou la revendication 3, où la pluralité de trous d'aération (20, 21) est formée pour être positionnée sur un côté inférieur dans une direction verticale du véhicule lors du déploiement par gonflement.

4. Coussin gonflable de protection contre une collision latérale selon la revendication 3, où la pluralité of trous d'aération (20, 21) est formée de telle manière qu'une surface totale des ouvertures des trous d'aération (20, 21) est sensiblement égale à une surface de référence définie comme une surface d'une ouverture d'un seul trou d'aération pour assurer un débit d'échappement exigé.

5. Coussin gonflable de protection contre une collision latérale selon l'une quelconque des revendications 1 à 4, où un tissu de renforcement (80) est cousu avec la partie cousue continue (30, 31) sur les zones de bordure périphériques extérieures de la pluralité de trous d'aération (20, 21).

6. Système de coussin gonflable de protection contre une collision latérale, comprenant: le coussin gonflable de protection contre une collision latérale (11) selon l'une des revendications 1 à 5; et un générateur (13) pour refouler un fluide sous pression permettant au coussin gonflable de protection contre une collision latérale (11) de se gonfler pour être déployé.

7. Siège de véhicule, comprenant: le coussin gonflable de protection contre une collision latérale (11) selon l'une des revendications 1 à 5; et un générateur (13) pour refouler un fluide sous pression permettant au coussin gonflable de protection contre une collision latérale (11) de se gonfler pour être déployé.
